# EUROPEAN PATENT APPLICATION

(11) **EP 4 099 479 A2**
(43) Date of publication of application: **07.12.2022**
(21) Application number: 22176428.5
(22) Date of filing: 31.05.2022
(51) Int. Cl.: H01M 10/613, H01M 10/623, H01M 10/655, H01M 50/247, A24F 40/40

(54) **BATTERY ASSEMBLY AND ELECTRONIC ATOMIZING DEVICE**

(30) Priority: 01.06.2021 CN 202110610522; 01.06.2021 CN 202110609756
(71) Applicant: Shenzhen Smoore Technology Limited, Shenzhen, Guangdong 518102 (CN)
(72) Inventor: LIANG, Zhijia, Shenzhen, 518102 (CN); XIE, Zhengjun, Shenzhen, 518102 (CN); MING, Zhinan, Shenzhen, 518102 (CN); LI, Jun, Shenzhen, 518102 (CN); ZENG, Zhaohuan, Shenzhen, 518102 (CN); SHEN, Pifa, Shenzhen, 518102 (CN)
(74) Representative: De Arpe Tejero, Manuel

(57) **Abstract**

The present disclosure provides a battery assembly (10) and an electronic atomizing device (50). The battery assembly includes a housing (11); a cell (13) located in the housing (11); and a heat-dissipating element (12) located in the housing (11) and disposed on the cell (13). Heat on the cell (13) may be transferred to the housing (11) by the heat-dissipating element (12) for dissipating, so that an ambient temperature of a surface of the cell (13) may be reduced.

## Description

### TECHNICAL FIELD

The present disclosure relates to the field of electronic atomizing devices, and in particular to a battery assembly of an electronic atomizing device and an electronic atomizing device.

### BACKGROUND

For an existing electronic atomizing device, a charging current and a discharging current of a cell are small, the cell produces less heat during use. It is not high for a requirement for temperature detection of the cell and that for an ambient temperature of the cell.

A charging speed of the existing electronic atomizing device is slower. More than one hour may be required for a full charge. Therefore, there is a growing demand for a fast-charging technology for the cell. Due to the charging current of the cell in the fast-charging technology being large, an amount of heat generated by an atomizing device in a charging process is large. A usage specification of the cell requires that the ambient temperature is not allowed to exceed 45°C. Therefore, in an original structural solution, due to the amount of heat generated by a circuit board component being larger, which is unable to be quickly dissipated, resulting in an ambient temperature inside the cell being excessively high. The temperature of the cell being over high causes a reduction or termination of the charging current, which affects a use of a fast-charging function.

### SUMMARY

The present disclosure provides a battery assembly and an electronic atomizing device, which may reduce the ambient temperature of a surface of the cell. A heat-dissipating element is added between the cell and a housing, such that the ambient temperature of the surface of the cell may be reduced through the heat-dissipating element transferring the heat to the housing for dissipating.

In order to resolve the above technical problems, a first technical solution according to some embodiments of the present disclosure is to provide a battery assembly. The battery assembly includes a housing; a cell, located in the housing; and a heat-dissipating element, located in the housing, disposed on the cell, and configured to dissipate heat generated by the cell.

In some embodiments, a first side of the heat-dissipating element is in direct contact with the cell, and a second side of the heat-dissipating element is in direct contact with the housing.

In some embodiments, an adhesive layer is disposed between the heat-dissipating element and the cell.

In some embodiments, a projection area of the heat-dissipating element on a surface of the cell is greater than 80% of an area of the surface of the cell.

In some embodiments, the cell includes a cell body; and an electrode tab, disposed on the cell body; the heat-dissipating element includes a heat-dissipating layer, arranged between the cell body and the housing, and attached to both surfaces of the cell body and the housing; and a heat-dissipating body, attached to a surface of the electrode tab.

In some embodiments, a first end of the heat-dissipating body abuts against the electrode tab, and a second end of the heat-dissipating body abuts against the housing.

In some embodiments, a material of the heat-dissipating element is a foam sheet of graphite of graphite.

In some embodiments, the foam sheet of graphite is in a compressed state.

In some embodiments, the battery assembly further includes a bracket; the cell is disposed on the bracket; a through hole is defined in the bracket, so that both a first surface of the cell and a second surface of the cell opposite to the first surface are completely exposed; the heat-dissipating element includes a first heat-dissipating layer and a second heat-dissipating layer; the first heat-dissipating layer is arranged between the first surface and the housing, and attached to both the first surface and a surface of the housing; and the second heat-dissipating layer is arranged between the second surface and the housing, and attached to both the second surface and a surface of the housing.

In order to resolve the above technical problems, a second technical solution according to the present disclosure is to provide an electronic atomizing device The electronic atomizing device includes an atomizer; and a battery assembly configured to supply power to the atomizer, and including the battery assembly according to any one of the above.

### BRIEF DESCRIPTION OF THE DRAWINGS

To describe the technical solutions in the embodiments of the present disclosure more clearly, accompanying drawings required for describing the embodiments will be briefly described in the following. Apparently, the accompanying drawings in the following description only show some embodiments of the present disclosure. For a person of ordinary skill in the art may obtain other accompanying drawings according to the accompanying drawings without creative efforts.
FIG. 1 is an overall schematic diagram of an atomizer according to some embodiments of the present disclosure.
FIG. 2 is a structural schematic in a front view of a battery assembly with a housing removed according to some embodiments of the present disclosure.
FIG. 3 is a structural schematic in a rear view of the battery assembly with the housing removed according to some embodiments of the present disclosure.
FIG. 4 is a cross-sectional schematic view of the battery assembly in FIG. 1 taken along an A-A direction.
FIG. 5 is a schematic diagram of an end surface of the battery assembly in FIG. 1.
FIG. 6 is a structural schematic diagram of an electronic atomizing device of according to an embodiment of the present disclosure.

### DETAILED DESCRIPTION

The technical solutions in the embodiments of the present disclosure are clearly and completely described below with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without the creative efforts shall fall within a protection scope of the present disclosure.

The terms "first", "second", and "third" in the present disclosure are used for descriptive purposes only and should not be construed as indicating or implying relative importance or implicitly indicating the number of technical features indicated. Therefore, features defined with the terms "first", "second", and "third" can explicitly or implicitly include at least one of the features. In the description of some embodiments of the present disclosure, "more" means at least two, for example two, three, unless it is specifically defined otherwise. All directional indications (for example, up, down, left, right, front, back) in the embodiments of the present disclosure are only used for explaining relative position relationships, movement situations or the like between the various components in a specific posture (as shown in the accompanying drawings). If the specific posture changes, directional indications change accordingly. In addition, terms "include", "have", and any variant thereof are intended to cover a non-exclusive inclusion. For example, a process, a method, a system, a product, or a device which includes a series of steps or units is not limited to the listed steps or units, but further optionally includes a step or unit that is not listed, or further optionally includes another step or unit that is intrinsic to the process, the method, the product, or the device.

Term "embodiments" or "embodiment" mentioned in the specification mean that particular features, structures, or characteristics described with reference to the embodiments may be included in at least one embodiment of the present disclosure. The term appearing at various positions of the specification may not refer to the same embodiment or an independent or alternative embodiment that is mutually exclusive with another embodiment. It is explicitly or implicitly understood by a person skilled in the art that the embodiments described in the specification may be combined with other embodiments.

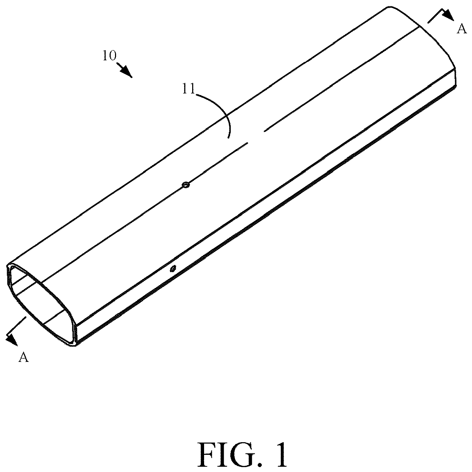

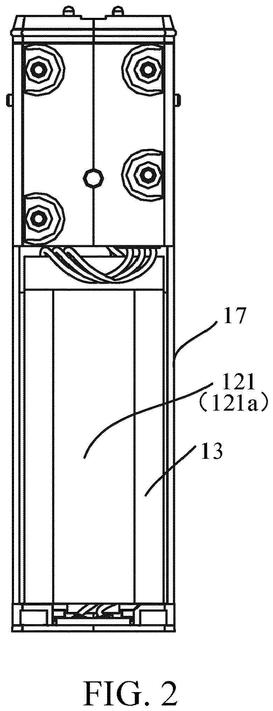

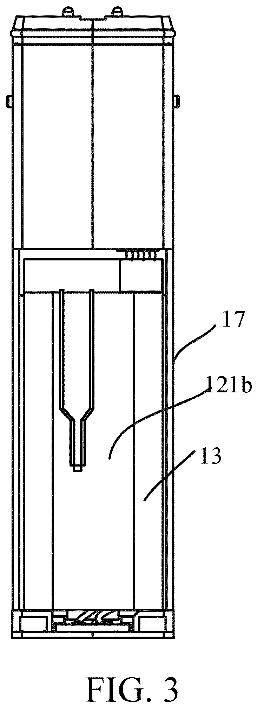

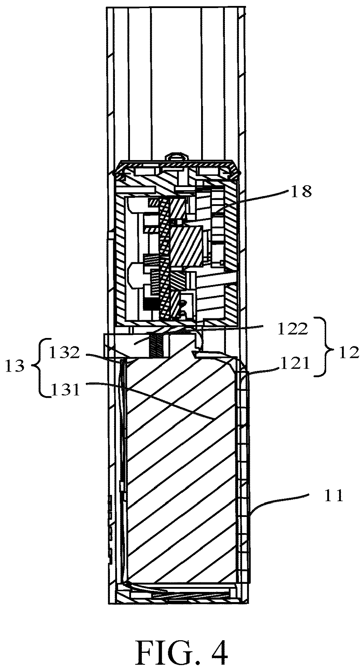

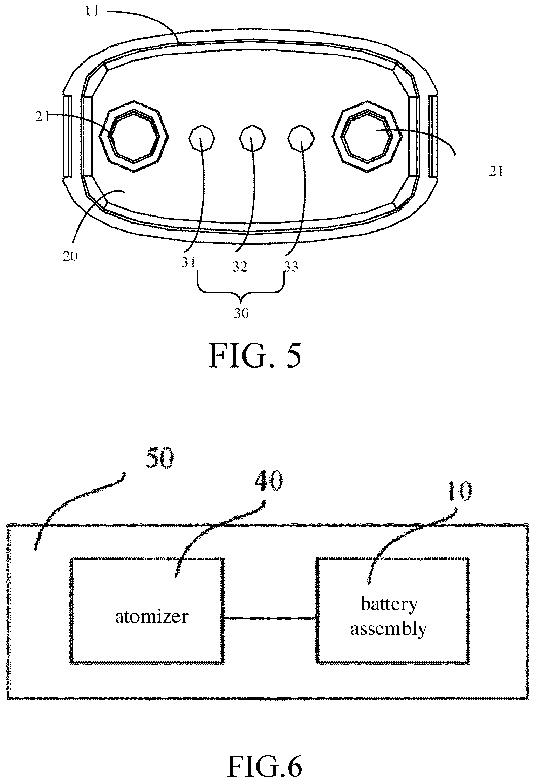

As shown in FIG. 1 to FIG. 6, FIG. 1 is an overall schematic diagram of an atomizer according to some embodiments of the present disclosure. FIG. 2 is a structural schematic in a front view of a battery assembly with a housing removed according to some embodiments of the present disclosure. FIG. 3 is a structural schematic in a rear view of the battery assembly with the housing removed according to some embodiments of the present disclosure. FIG. 4 is a cross-sectional schematic view of the battery assembly in FIG. 1 taken along an A-A direction. FIG. 5 is a schematic diagram of an end surface of the battery assembly in FIG. 1. FIG. 6 is a structural schematic diagram of an electronic atomizing device of according to an embodiment of the present disclosure.

Specifically, a battery assembly 10 includes a housing 11, a heat-dissipating element 12, and a cell 13. The cell 13 is disposed in the housing 11. The heat-dissipating element 12 is located between the housing 11 and the cell 13, and is configured to dissipate heat generated by the cell 13.

According to the battery assembly 10 provided in some embodiments of the present disclosure, the heat-dissipating element 12 is disposed on the cell 13, so that heat-dissipating element 12 may quickly transfer the heat generated by the cell 13 to the housing 11, such that the heat may be dissipated out through the housing 11. In this way, the ambient temperature of the cell 13 may be reduced, so as to ensure that the temperature of the cell 13 is in a normal operating range.

Specifically, in an embodiment, the heat-dissipating element 12 may be disposed between the cell 13 and the housing 11. That is, a first side of the heat-dissipating element 12 is in direct contact with the cell 13 and a second side of the heat-dissipating element 12 is in direct contact with the housing 11, so as to transfer the heat generated by the cell 13 to the housing 11. Due to the housing 11 being in direct contact with outside air, heat may be transferred and dissipated by the air, which may further reduce the ambient temperature of the cell 13.

In an embodiment, the heat-dissipating element 12 may be fixed on a surface of the cell 13. For example, a viscous substance may be disposed on the first side of the heat-dissipating element 12 close to the cell 13, which is a side close to the cell 13. The heat-dissipating element 12 may be fixedly bonded to the cell 13 through the viscous substance, and then assembled into the housing 11, such that a possibility of the heat-dissipating element 12 being falling off from the cell 13 in an assembly process may be reduced. When the cell 13 is assembled with the housing 11, the second side of the heat-dissipating element 12, i.e., a side away from the cell 13, may be in direct contact with the housing 11. Further, a non-conductive and viscous substance may be selected as the viscous substance. For example, the viscous substance may be a glue, an epoxy, or the like.

In another embodiment, the viscous substance layer may be disposed on an outer surface of the cell 13 first, and the heat-dissipating element 12 may be fixed on the cell 13 and then assembled into the housing 11.

In another embodiment, the heat-dissipating element 12 may be fixed on a surface of the housing 11 close to the cell 13. For example, the viscous substance is disposed on the second side of the heat-dissipating element close to the housing 11. The heat-dissipating element 12 may be fixedly bonded to the housing 11 through the viscous substance. In this way, when the cell 13 is assembled with the housing 11, the first side of the heat-dissipating element 12 may be in direct contact with the cell 13.

Specifically, in order to enable the heat-dissipating element 12 to transfer the heat of the cell 13 to the housing 11 well, a thickness of the heat-dissipating element 12 may be required to be equal to or greater than an assembly distance between the cell 13 and the housing 11.

When the thickness of the heat-dissipating element 12 is equal to the assembly distance from the cell 13 to the housing 11, the first side of the heat dissipating element 12 is in direct contact with the outer surface of the cell 13, and the second side opposite to the first side of the heat-dissipating element 12 is in direct contact with an inner surface of the housing 11. When the thickness of the heat-dissipating element 12 is greater than the assembly distance from the cell 13 to the housing 11, an accommodating groove capable of accommodating the heat-dissipating element 12 may further be defined at a position corresponding to the heat-dissipating element 12 in the inner surface of the housing 11. After the cell 13 is assembled with the housing 11, a side of the heat-dissipating element 12 close to the housing 11 is at least partially embedded in the accommodating groove of the housing 11. A specific structure is not limited, as long as a heat conduction may be performed so as to reduce the ambient temperature of the surface of the cell 13.

In an embodiment, in order to better achieve a heat-dissipating effect of the cell 13, the heat-dissipating element 12 may be configured to cover the surface of the cell 13 over a large area. Specifically, a projection area of the heat-dissipating element 12 on the surface of the cell 13 may be configured to be greater than 80% of an area of the surface of the cell 13. That is, an area covered by the heat-dissipating element 12 is greater than 80% of the outer surface of the cell 13, such that the heat generated on the cell 13 may be sufficiently conducted to the heat-dissipating element 12, so as to reduce the ambient temperature of the cell 13.

Specifically, the cell 13 includes a cell body 131 and an electrode tab 132. Power for driving an atomizing component may be stored in the cell body 131. The electrode tab 132 is electrically connected to a circuit board 18. Specifically, the electrode tab 132 is electrically connected to the circuit board 18 via a lead wire. The circuit board 18 may be configured to control the cell body 131 to supply power to a heating component in the atomizer, such that an aerosol-generating substrate may be heated and an aerosol for a user to inhale may be produced.

In an embodiment, the heat-dissipating element 12 may include a heat-dissipating layer 121 and a heat-dissipating body 122. Specifically, the heat-dissipating layer 121 is arranged between the cell body 131 and the housing 11, and attached to both surfaces of the cell body 131 and the housing 11. The heat-dissipating body 122 is attached to a surface of the electrode tab 132. The heat-dissipating layer 121 may be attached to two side surfaces opposite to each other of the cell body 131 or surround a side surface of the entire cell body 131.

A shape and a size of the heat-dissipating body 122 are not limited. Specifically, the heat-dissipating body 122 may be in a cuboid shape. One end of the cell 13 has a protrusion portion 16, and the electrode tab 132 is disposed on the protrusion portion 16. A first end of the heat-dissipating body 122 abuts against a side surface of the protrusion portion 16, and a second end opposite to the first end of the heat-dissipating body 122 abuts against the housing 11. A first side surface of the heat-dissipating body 122 abuts against the electrode tab 132, and a second side surface opposite to the first side surface is flush with a top surface of the protrusion portion 16. A material of the heat-dissipating element 13 may be a high-thermal-conducting material such as graphite, a carbon nanotube, a metal, or a ceramic. Specifically, in the present embodiment, the material of the heat-dissipating element 12 is preferably a foam sheet of graphite. Specifically, the foam sheet of graphite is first attached to the surface of the cell 13 by an adhesive layer. The foam sheet of graphite may be compressed before an assembly, and then assembled into the housing 11 together with the cell 13. After located between the housing 11 and the cell 13, the foam sheet of graphite may gradually recover, which may ensure that the foam sheet of graphite is in a full direct contact with the outer surface of the cell 13 and the inner surface of the housing 11. In this way, the heat generated on the cell 13 may be quickly conducted to the housing 11 and dissipated.

Specifically, a terminal-conducting coefficient of the graphite is large, and a compressible ratio of a foam is large. Therefore, in an embodiment, during a process of inserting the cell 13 into the housing 11, the heat-dissipating element 12 may be compressed first. After the assembly is completed, the heat-dissipating element 12 may slowly recover but not completely recover to a natural state. That is, the foam sheet of graphite is in a compressed state. The foam sheet of graphite which not completely recover to the natural state, may ensure a sufficient and tight direct contact between the heat-dissipating element 12 and the cell 13 and that between the heat-dissipating element 12 and the housing 11. In this way, the cell 13 may be fixed. Therefore, a foam sheet used for fixing originally between the cell 13 and the housing 11 may also be omitted, which may reduce a cost of the battery assembly 10.

As shown in FIG. 2 and FIG. 3, the battery assembly 10 of some embodiments of the present disclosure may further include a bracket 17. The cell 13 may be disposed on the bracket 17. Specifically, a through hole may be defined in the bracket 17. The cell 13 may be embedded in the through hole, so that both of a first surface of the cell 13 and a second surface of the cell 13 opposite to the first surface are completely exposed. The heat-dissipating layer 121 may include a first heat-dissipating layer 121a and a second heat-dissipating layer 121b. The first heat-dissipating layer 121a is arranged between the first surface of the cell 13 and the housing 11, and attached to both the first surface and the surface of the housing. The second heat-dissipating layer 121b is arranged between the second surface of the cell 13 and the housing 11, and attached to both the second surface and the surface of the housing 11. In an embodiment, the first heat-dissipating layer 121a may cover an entire of the first surface of the cell 13. The second heat-dissipating layer 121b may cover an entire of the second surface of the cell 13. In an embodiment, the bracket 17 may further include a mounting groove arranged at an interval with the through hole. The cell 13 is embedded in the through hole. The circuit board 18 is disposed in the mounting groove. One end of the bracket 17 is a connection portion, and an electrode is disposed on the connection portion to be connected to the atomizer.

Specifically, as shown in FIG. 1, the housing 11 is arranged around along an axial direction of the cell 13 and dissipate the heat of the cell 13 conducted through the heat-dissipating element 12 out, so that the ambient temperature of the surface of the cell 13 is under a normal operating condition of the cell 13. A material of the housing 11 may be a metal or an alloy.

Specifically, as shown in FIG. 5, the battery assembly 10 of the embodiments of the present disclosure may further include a charging element 20 arranged at an end of the bracket 17 away from the connection portion and connected to the circuit board 18 by a wire. The charging element 20 may include a positive electrode 31, a negative electrode 32, and a protective electrode 33, and be configured to connect to an external charging head to charge the cell 13. The charging element 20 may further include an indicator light 21. When the cell 13 is charged, the indicator light 21 may display in red. When the cell 13 is fully charged, the indicator light 21 may display in green. In an embodiment, two indicator lights 21 are disposed on opposite two sides of end surfaces of the charging element 20, respectively. That is, one of the indicator lights 21 may be arranged on a first side of an end surface of the charging element 20, and the other of the indicator lights 21 may be arranged on a second side opposite to the first side of the end surface of the charging element 20.

Specifically, as shown in FIG. 6, FIG. 6 is a structural schematic diagram of an electronic atomizing device of according to an embodiment of the present disclosure. Specifically, the electronic atomizing device 50 may include an atomizer 40 and a battery assembly 10. The battery assembly 10 is configured to supply power to the atomizer 40. The battery assembly 10 may include the battery assembly 10 in any of the embodiments described above according to FIG. 1 to FIG. 5.

The above descriptions are merely implementations of the present disclosure, and a patent scope of the present disclosure is not limited thereto. All variations for equivalent structures or processes made according to contents of the specification and the accompanying drawings of the present disclosure, or direct or indirect applications in other related technical fields shall fall within the protection scope of the present disclosure.

## Claims

1. A battery assembly (10) of an electronic atomizing device (50), **characterized by** comprising:
a housing (11);
a cell (13), located in the housing (11); and
a heat-dissipating element (12), located in the housing (11), disposed on the cell (13), and configured to dissipate heat generated by the cell (13).

2. The battery assembly (10) according to claim 1, wherein a first side of the heat-dissipating element (12) is in direct contact with the cell (13), and a second side of the heat-dissipating element (12) is in direct contact with the housing (11).

3. The battery assembly (10) according to claim 1, wherein an adhesive layer is disposed between the heat-dissipating element (12) and the cell (13).

4. The battery assembly (10) according to claim 1, wherein a projection area of the heat-dissipating element (12) on a surface of the cell (13) is greater than 80% of an area of the surface of the cell (13).

5. The battery assembly (10) according to claim 1, wherein the cell (13) comprises:
a cell body (131); and
an electrode tab (132), disposed on the cell body (131);
wherein the heat-dissipating element (12) comprises:
a heat-dissipating layer (121), arranged between the cell body (131) and the housing (11), and attached to both surfaces of the cell body (131) and the housing (11); and
a heat-dissipating body (122), attached to a surface of the electrode tab (132).

6. The battery assembly (10) according to claim 5, wherein a first end of the heat-dissipating body (122) abuts against the electrode tab (132), and a second end of the heat-dissipating body (122) abuts against the housing (11).

7. The battery assembly (10) according to claim 1, wherein a material of the heat-dissipating element (12) is a foam sheet of graphite.

8. The battery assembly (10) according to claim 7, wherein the foam sheet of graphite is in a compressed state.

9. The battery assembly (10) according to claim 1, further comprising a bracket (17), wherein the cell (13) is disposed on the bracket (17); a through hole is defined in the bracket (17), so that both a first surface of the cell (13) and a second surface of the cell (13) opposite to the first surface are completely exposed;
wherein the heat-dissipating element (12) comprises:
a first heat-dissipating layer (121), arranged between the first surface and the housing (11), and attached to both the first surface and a surface of the housing (11); and
a second heat-dissipating layer (121), arranged between the second surface and the housing (11), and attached to both the second surface and a surface of the housing (11);

10. An electronic atomizing device (50), **characterized by** comprising:
an atomizer (40); and
the battery assembly (10) according to any one of claims 1 to 9, configured to supply power to the atomizer (40).
